# EUROPEAN PATENT APPLICATION

(11) **EP 2 187 364 A1**
(43) Date of publication of application: **19.05.2010**
(21) Application number: 08169189.1
(22) Date of filing: 14.11.2008
(51) Int. Cl.: G07F 17/32, A63F 13/12

(54) **A method of providing an online game with increased functionality**

(71) Applicant: CueTease Limited, London, NW1 5QT (GB)
(72) Inventor:
(74) Representative: Howson, Richard G.B.

(57) **Abstract**

A method of providing an on-line game with increased functionality is embodied in a computer program (10). The program (10) having a central part (20), a database (50) and a client application (70). The central part (20) and the database (50) are executed on a server. The client application (70) is executed on the client's personal computer. In executing the method, the server provides video content to the client showing action in the game in which an object used in the game is engaged for movement from a start position to an end position. The server then receives, from the client, input indicative of a user's guess as to the end position of the object. The server then provides to the client information indicative of whether or not the user's guess is correct.

## Description

### Technical Field

This invention relates to a method of providing an online game with increased functionality.

### Background

The playing of online computer games is a popular pastime for many. Particularly popular are those games in which a user can become involved in the game by placing a bet on the outcome of the game. As users can become tired of a particular game in time, however, there is a need for games providers to provide new games if they are to retain existing users. It is also in the interests of games providers to provide games which provide a more interactive and rewarding user experience, such as by providing increased functionality, if they are to retain exiting users and attract new users.

It is an object of this invention to at least address these considerations in one or more embodiments.

### Summary

According to one aspect of this invention there is provided a method of providing an online game, the method including server processing means carrying out the steps of:
a) providing pre-guess video content to client processing means, the pre-guess video content showing action in a game in which an object used in the game is engaged for movement from a start position to an end position;
b) receiving, from the client processing means, a location-input indicative of a user's guess as to the end position of the object; and
c) providing, to the client processing means, information indicative of whether or not the user's guess is correct.

Providing an online game in which a user guesses the position of an object used in the game (for example a ball to be "potted" in a game of snooker) on the basis of video showing the object being engaged (for example being struck by the cue ball) represents an improvement in functionality of the game when compared with a more traditional "spot the ball" style game in which a static photograph only is used.

Step (b) may include the server processing means receiving from the client processing means a betting-input indicative of the value of a stake that the user wishes to bet on the user's guess being correct.

Step (a) may include providing pre-guess video content that shows the object being engaged, but does not show the object moving at least until the step (b) has been completed. Step (a) may include the step of providing pre-guess video content that also shows the object moving, but does not show the object reaching the end position at least until step (b) has been completed.

The location-input may be indicative of the user's guess as to the end position of the object in a frame of the video content in which the object is omitted, or, as one of several possible alternatives, in a still image in which the object is omitted. The object may be omitted by digitally manipulating the frame or image. The object may be omitted be physically removing the object before the frame or image is taken.

Step (c) may include providing post-guess video content to the client processing means that shows the object arriving at the end position. The post-guess video content may include the pre-guess video content and be a chronological continuation thereof that shows the object being engaged and moving from the start position to the end position. Step (c) may include providing post-guess image content comprising a static image that shows the object at the end position. The post-guess video and/or image content may be of higher resolution than the pre-guess video content, and may be provided by the server means such that it is viewable in a full screen mode on the client processing means.

There may be a plurality of users. Each user may interact with the server processing means via respective client processing means. Step (b) may include receiving a respective location-input from each client processing means. Step (c) may include providing to each client processing means information indicative of the user whose guess was correct and/or the closest.

The method may include the step of the server processing means receiving login information from the client server means that identifies the user. The method may include the step of the server means accessing a database to retrieve stored user information relating to the user. The stored user information may include an indication of the balance of a betting account of the user. Step (b) may include or be followed by the step of the processing means debiting the amount of the stake from the balance. Step (c) may be followed by the step of the server processing means adding winnings to the user's account in the event that the user correctly guessed, or most closely guessed, the end position.

Step (a) may be preceded by a participant-choosing step in which the server processing means provides the client processing means with information causing video or a static image of each of a plurality of selectable participants to be displayed by the client processing means and such that at least one of the selectable participants is selectable by the user. The participant-choosing step may include the server processing means receiving from the client processing means a participant-input indicative of the selectable participant selected by the user.

Step (a) may be preceded by a game-choosing step in which the server processing means provides the client processing means with information indicative of a plurality of selectable games selectable by the user. The game-choosing step may include the server processing means receiving from the client processing means a game-input indicative of the selectable game selected by the user.

The method may then continue with the participant being the selected participant and the game being the selected game.

The video content may show action in which the object is engaged by a participant in the game. The participant may be shown in the video content and/or any still image. The video content and/or any still image may show action in which the object is hit, thrown, kicked or in some other way engaged by the participant. The participant may be an at least semi-naked woman. In an embodiment, the video content shows a participant in the form of an at least semi-naked woman striking a ball on a billiards table with a billiards cue. Herein, it will be understood that the term "billiards" is used as a generic term to include games such as snooker and pool in which balls are struck on a table with a cue with a view to causing at least certain of the balls to fall into holes in the table known as "pockets".

In carrying out the method, the server processing means may access a database. The database may include at least two parts: a first part in which is stored non-media information needed in carrying out the method; and a second part in which is stored media information including video files and image files needed in carrying out the method. The first part may be in the form of a SQL database; the second part may be in the form of a file-based storage system that is not a SQL database.

According to a second aspect of this invention, there is provided server processing means programmed and operable to carry out the method defined hereinabove.

According to a third aspect of this invention, there is provided a server computer program having code portions executable by server processing means to cause those processing means to carry out the method defined hereinabove.

According to a fourth aspect of this invention, there is provided a client computer program having code portions executable by processing means to cause those processing means to operate as the client processing means defined hereinabove.

According to a fifth aspect of this invention, there is provided a record carrier containing thereon or therein a computer-readable record indicative of the server computer program and/or the client computer program.

The record carrier may be a physical storage medium. The physical storage medium may include a solid-state storage medium, such as, for example, a ROM, EPROM, EEPROM, flash memory device or a computer-readable magnetic or optical disk. The record carrier may be a signal, such as, for example, an electrical signal, wireless signal or light signal.

The steps need not necessarily be performed in the order that might be suggested by their alphabetic labels.

Herein, "video" is used to refer to moving pictures and "image" is used to refer to static picture.

### Brief Description of the Drawings

Specific embodiments of the invention are described below by way of example only and with reference to the accompanying drawings, in which:
Figure 1 is a schematic representation of the architecture of software which is executable by a server and a client to allow a user to play on the client an online game; and
Figures 2 to 5 show a flow diagram of steps performed by the server and client in executing the software.

### Specific Description of Certain Exemplary Embodiments

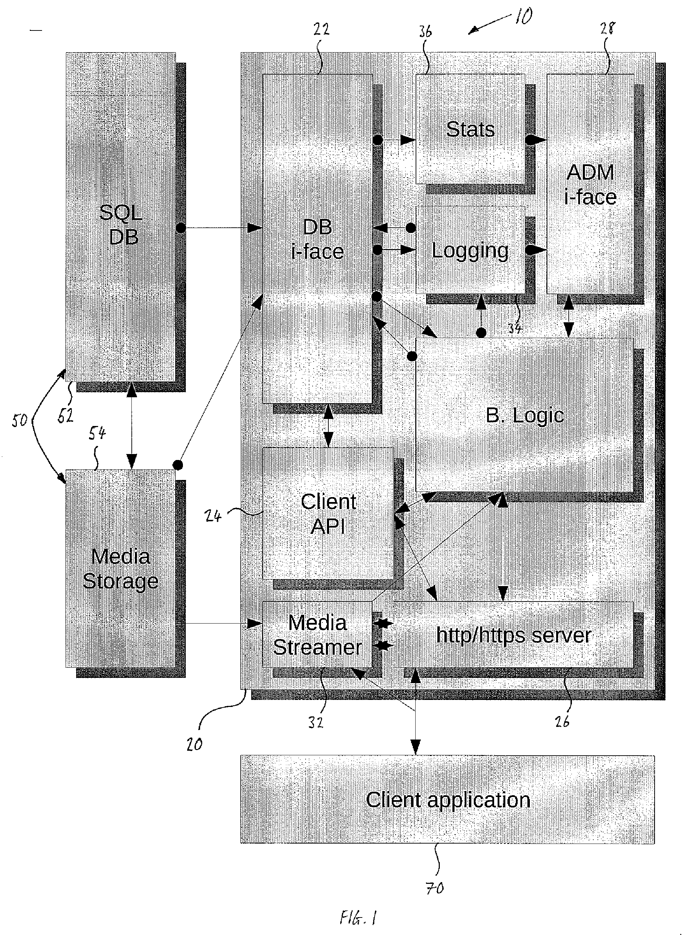

Figure 1 shows the architecture of software 10 that is stored on server processing means, such as a server. The software 10 is executable by the server and by client processing means, such as a client personal computer, to allow a user to play an online game via the client. For simplicity, the client personal computer will be referred to as the "client".

The software 10 has three main components. These are a central part 20, a database 50 and a client application 70.

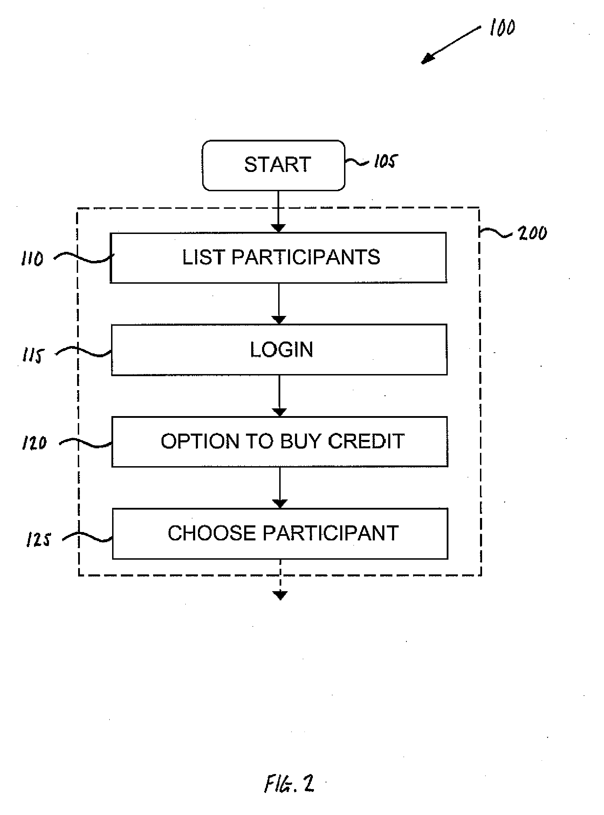

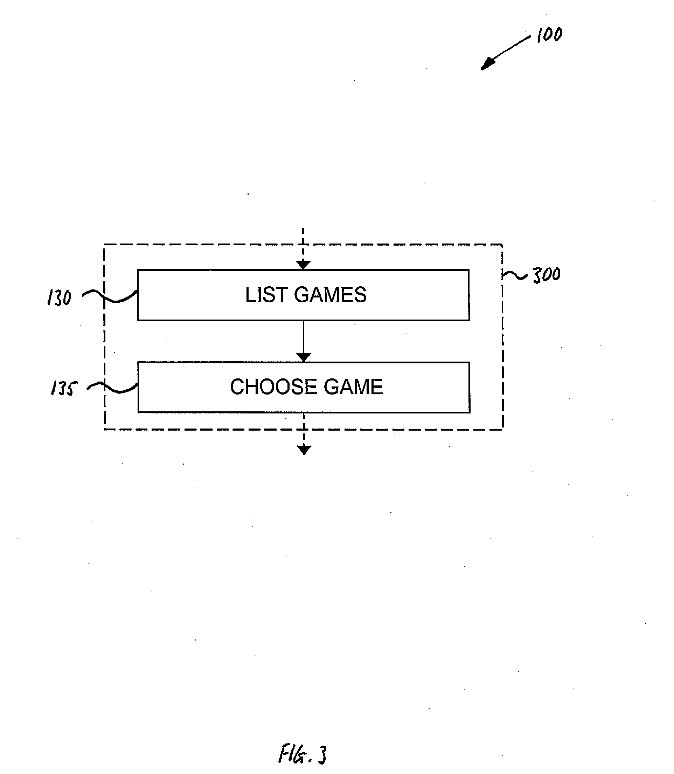

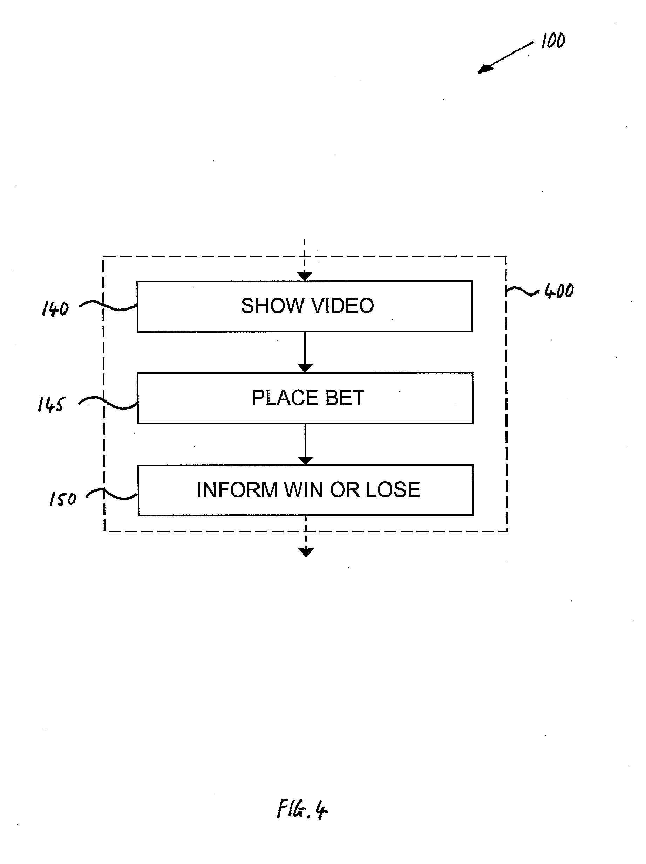

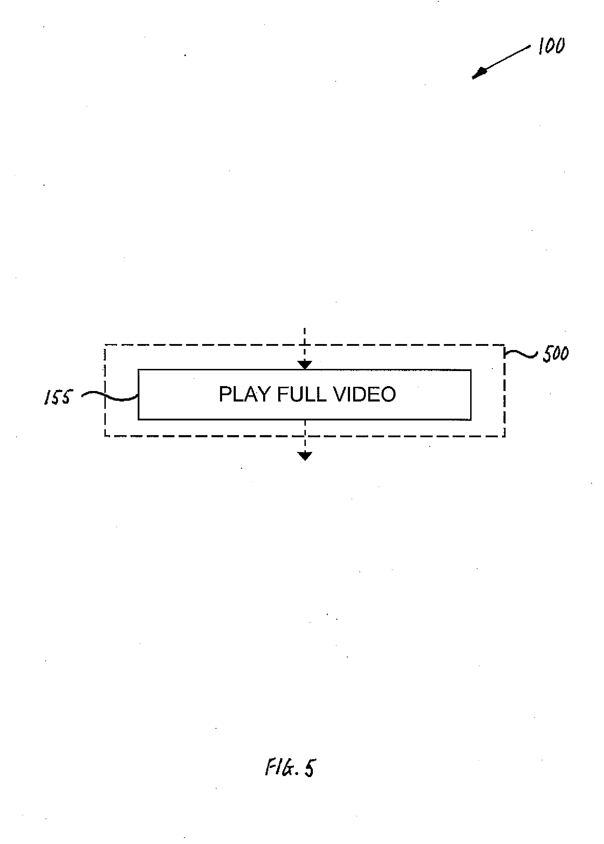

The central part 20 is a Java module which controls the system formed by the software 10 running on the server and client. The central part 20 provides centralization, functionality and connectivity to all the other components of the software 10. Game logic in the form of a method, which is explained below with reference to the flow diagram of Figure 2 to Figure 5, is implemented in the central part 20. In this embodiment, the central part 20 is implemented as a Java enterprise servlet, running inside a J2EE container, with it being envisaged that other arrangements may be used in alternative embodiments.

The database 50 contains all the information required for the system to operate. The database 50 consists of 2 parts: an SQL database 52 for all non-media information in the system, and a file-based storage system 54 for media files that include video in the form of movie files, and image files. Storing the media files in the file-based storage system 54 free the SQL database engine from the task of storing and managing this large amount of information which is not intended to be searched, sorted or classified. This allows the SQL database 52 to be smaller and faster, an important feature in the heavily multi-threaded environment the server is intended to work in. Thus, efficiency of the system is improved. However, information relating to the content of the movie files and image files, and their association with other parts of the system, is stored in the SQL database 52. The database 50 is arranged such that is can be accessed in parallel by many clients and possibly from an administrative interface (described below) at the same time.

The client application 70 is a game interface which the user will use to play the game in a user-friendly way. In this embodiment, the client application 70 is a flash application that is downloaded from the server over the internet and run on the client personal computer, inside a web browser. The client application 70 interacts with the remainder of the software 10 running on the server using a predefined API for all actions. It is, however, envisaged that other languages may be used for developing client interfaces in other embodiments.

Sub-components of the central part 20 will now be described. The central part includes the following sub-components:
- a database interface 22, which keeps track of all the connections to the database 50;
- a client API section 24, which provides an easy to access API to the client side;
- a multi-threaded server 26, which exports the API through an http/https server to as many clients as required;
- an administrative interface 28 provided in a webpage, which provides a dynamically generated web page to an administrator to manage and check game status and certain parameters and to define new games and insert the in the live system, while it is running;
- a payment management part (not shown), which interfaces with a payment system to allow payment to be taken off a credit or debit card of the user and also to refund winnings to the card;
- a media streaming server 32, which streams media content to the clients and provides media streaming functionality to the client application, without using any proprietary streaming server for this;
- a logging section 34, which stores information as to system actions in chronological order;
- a statistics section 36, which generates real time statistics of the system.

Although use of the system to play a particular game will be described below, software with this architecture can act as a backend for any game which has similar functionality, regardless of the media content. It has been developed on Linux using a MySQL database and J2SE JRE with J2EE extensions. The system was designed in such a way to allow easy porting to another SQL database.

The operation of the game will now be described with reference to the flow diagrams shown in Figures 2 to 5. That operation will be described as a method comprising a series of steps, it being understood that the software is arranged such that the server and/or each client perform these steps and hence this method in executing the software. In this embodiment the game is a game of snooker being played by participants in the form of semi-naked women. There are several users, each at a respective client that communicates with the server.

With reference to Figure 2, the method 100 begins at step 105 with a first HTML page being loaded in a browser running on the client. This is index.html page 200.

The method then proceeds to step 110 in which a list of possible participants in the game is displayed on the index.html page 200. The list includes the name of each possible participant, together with an image of the participant. Hovering a mouse cursor over the picture of each possible participant causes a description of the participant to be displayed.

Before a user can play the game, he must log in to an existing account, or create a new account and log in to that account. This takes place in step 115 within index.html page 200. User login requires a username and password pair. These are stored in the database 50 together with other user related information. After the user performs a successful login, the server sets a session cookie in the user's browser to later identify the user. Once logged in, the user's username is displayed at the top of the screen, together with the amount of monetary funds credited to an account of the user with a provider of the game.

Once a user is logged in, the method proceeds to step 120 in which the user has the option to make an online payment from a debit or credit card to have further funds credited to his account. This might be thought of as the user "buying credit".

The final step 125 of the method 100 that takes place in the index.html page is that of the user choosing a participant to take part in the game. Once the user has done this, the method 100 proceeds to step 130.

In step 130, a new webpage is loaded in the browser running on the client. This is a gameslist.html page 300. Gameslist.html page 300 communicates with index.html 200 from which it obtains the URL of the server and information identifying the chosen participant. In addition, the method 100 checks to make sure that the user is still logged on and, if so, displays the client's username and account information at the top of the screen. A list is also displayed of games for which the chosen participant is available. The list includes an image of the game, the name of the participant and the available jackpot for the game.

The user then chooses one of the games in step 135. Once the user has done this, the method 100 proceeds to step 140.

In step 140, a new webpage is loaded in the browser running on the client. This is a gamesplay.html page 400, which, again, firstly communicates with the previous page, gameslist.html 300 to obtain therefrom the URL of the server and information identifying the chosen game. In addition, the method 100 checks to make sure that the user is still logged on and, if so, displays the client's username and account information at the top of the screen.

In step 140, video is streamed from the server to the client and played in the gamesplay.html page 400. The video shows the chosen participant beginning to play the game, which in the present embodiment, involves the participant striking a cue ball with a snooker cue. The video stops before the ball, and any balls which it hits, come to rest.

The method then proceeds to step 145 in which the user is invited to place a bet by positioning a cross on a static image that shows the position of the balls at rest, with the exception of the cue ball, with the intention of accurately marking the position of the absent cue ball. The cost of the bet is predetermined for each game by an administrator. The user may make multiple bets, with his account being debited accordingly for each bet placed. The user may also cancel bets, buy more credit or continue with the game.

Upon choosing to continue with the game, the method 100 proceeds to step 150. In this step, if none of the user's bets are winning bets, a pop up is produced confirming that the bets have been accepted and that none are winning bets. If one of the bets is a winning bet, the method proceeds to step 155.

In step 155 a new webpage is loaded in the browser running on the client. This is a confirmation.html page 500, which, again, firstly communicates with the previous page, gamesplay.html 400 to obtain therefrom the URL of the server and information identifying the game that has just been won. In addition, the method 100 checks to make sure that the user is still logged on and, if so, displays the client's username and account information at the top of the screen. The method then causes the server to stream the full video of the game, showing the participant striking the ball and the balls coming to rest, and also to display on the client a static image that confirms the position of the cue ball. Both the video and the static image may be viewed in a full-screen mode on the client. The method also credits to the user's account his winnings. In this embodiment, this would be a percentage of the total amount bet on the game by all users betting on the game. For example, the percentage paid to the winning user may be 80% of the total amount, with the remainder being retained by the provider of the game.

Although not shown in the drawings, the method then proceeds to an information page which displays the players account status. In other embodiments, however, the method may return to the index.html page or the gameslist.html page

In the present embodiment, all the communication between server and client is performed over SSL/TLS secured links in order to provide for secure communication.

In an alternative embodiment, the method includes functionality that allows a user to see all the running games or to filter these by participant, before choosing the game which he wishes to play

In another alternative embodiment a game may be terminated by an administrator request. Should the game continue for more than a certain amount of time without a user correctly guessing the position of the cue ball, but with at least some users having placed bets, the administrator can choose to prematurely terminate the game. The winner would then by the user whose guess as to the resting place of the cue ball was closest to the correct resting place. Should there be a tie, the first-placed bet would be chosen as the winner. In the event of a game being prematurely terminated by an administrator, the winner may receive a smaller percentage of the total amount bet on the game.

In a further alternative embodiment, when the game is terminated, all users are provided with access to the full, uninterrupted, video of the game and the static image that shows the actual resting place of the cue ball.

In other embodiments, other types of game may be played. For example a game of darts may be substituted for a game of snooker in the embodiment described hereinabove with users placing bets on the resting position in a dartboard of a dart thrown by a participant in the game.

## Claims

1. A method of providing an online game, the method including server processing means carrying out the steps of:
a) providing pre-guess video content to client processing means, the pre-guess video content showing action in a game in which an object used in the game is engaged for movement from a start position to an end position;
b) receiving, from the client processing means, a location-input indicative of a user's guess as to the end position of the object; and
c) providing, to the client processing means, information indicative of whether or not the user's guess is correct.

2. A method according to claim 1, wherein step (b) includes the server processing means receiving from the client processing means a betting-input indicative of the value of a stake that the user wishes to bet on the user's guess being correct.

3. A method according to claim 1 or claim 2, wherein step (a) includes providing pre-guess video content that shows the object being engaged, but does not show the object moving at least until the step (b) has been completed.

4. A method according to claim 1 or claim 2, wherein step (a) includes the step of providing pre-guess video content that also shows the object moving, but does not show the object reaching the end position at least until step (b) has been completed.

5. A method according to any preceding claim, wherein the location-input is indicative of the user's guess as to the end position of the object in a frame of the video content in which the object is omitted, or, as one of several possible alternatives, in a still image in which the object is omitted. The object may be omitted by digitally manipulating the frame or image.

6. A method according to any preceding claim, wherein step (c) includes providing post-guess video content to the client processing means that shows the object arriving at the end position; and, optionally, wherein the post-guess video content includes the pre-guess video content and is a chronological continuation thereof that shows the object being engaged and moving from the start position to the end position.

7. A method according to claim 6, wherein step (c) includes providing post-guess image content comprising a static image that shows the object at the end position.

8. A method according to claim 6 or claim 7, wherein the post-guess video and/or image content is of higher resolution than the pre-guess video content, and optionally is provided by the server means such that it is viewable in a full screen mode on the client processing means.

9. A method according to any preceding claim, wherein there are a plurality of users, each user interacting with the server processing means via respective client processing means, and wherein step (b) includes receiving a respective location-input from each client processing means.

10. A method according to any preceding claim, wherein the method includes the step of the server processing means receiving login information from the client server means that identifies the user, and includes the step of the server means accessing a database and to retrieve stored user information relating to the user, the stored user information including an indication of the balance of a betting account of the user, and wherein step (b) includes or is followed by the step of the processing means debiting the amount of the stake from the balance.

11. A method according to any preceding claim, wherein step (a) is preceded by a participant-choosing step in which the server processing means provides the client processing means with information causing video or a static image of each of a plurality of selectable participants to be displayed by the client processing means and such that at least one of the selectable participants to be selectable by the user; and, optionally, wherein the participant-choosing step includes the server processing means receiving from the client processing means a participant-input indicative of the selectable participant selected by the user.

12. A method according to any preceding claim, wherein step (a) is preceded by a game-choosing step in which the server processing means provides the client processing means with information indicative of a plurality of selectable games selectable by the user; and, optionally, wherein the game-choosing step includes the server processing means receiving from the client processing means a game-input indicative of the selectable game selected by the user.

13. Server processing means programmed and operable to carry out a method according to any one of claim 1 to claim 12.

14. A server computer program having code portions executable by server processing means to cause those processing means to carry out a method according to any one of claim 1 to claim 12.

15. A client computer program having code portions executable by processing means to cause those processing means to operate as client processing means as defined in any one of claim 1 to claim 12.

16. A record carrier containing thereon or therein a computer-readable record indicative of a server computer program according to claim 14 and/or a client computer program according to claim 15.
